# EUROPEAN PATENT APPLICATION

(11) **EP 4 704 475 A1**
(43) Date of publication of application: **04.03.2026**
(21) Application number: 23934452.6
(22) Date of filing: 25.04.2023
(51) Int. Cl.: H04W 60/00, H04W 48/08

(54) **NETWORK-ACCESS MANAGEMENT METHOD, APPARATUS AND SYSTEM, AND COMMUNICATION DEVICE AND MEDIUM**

(71) Applicant: Beijing Xiaomi Mobile Software Co., Ltd., Beijing 100085 (CN)
(72) Inventor: ZHU, Chunhui, Beijing 100085 (CN)
(74) Representative: Dehns Germany Partnerschaft mbB
(86) International application number: PCT/CN2023/090696
(87) International publication number: WO 2024/221247

(57) **Abstract**

The present disclosure relates to a network-access management method, apparatus and system, and a communication device and a medium. The network-access management method comprises: an access and mobility management function network element receiving a registration request from a terminal; determining that the terminal is successfully registered on a unified data management network element (UDM), and determining subscription data for the terminal; and making the terminal access a network according to the subscription data. In this way, an access and mobility management function network element can be supported to make a terminal access a network according to an indication in subscription data.

## Description

### TECHNICAL FIELD

The present disclosure relates to the technical field of communications, and in particular, to a network access management method and apparatus, a system, a communication device, and a medium.

### BACKGROUND

The 3rd Generation Partnership Project (3GPP) is a highly secure system. A variety of algorithms and protocols have been introduced to ensure not only authentication and confidentiality/privacy, but also other security functions such as data integrity and availability. However, the existing approach that relies on cryptography may not be applicable to ambient power-enabled IoT (referred to as Ambient IoT, or A-IoT) devices.

### SUMMARY

The embodiments of the present disclosure provide a network access management method and apparatus, a system, a communication device, and a medium.

According to a first aspect of the embodiments of the present disclosure, a network access management method is provided, which is performed by an access and mobility management function network element (AMF). The method includes:
receiving a registration request from a terminal;
determining that the terminal is successfully registered on a unified data management network element (UDM), and determining subscription data of the terminal; and
accessing the terminal to a network according to the subscription data.

According to a second aspect of the embodiments of the present disclosure, a network access management method is provided, which is performed by a unified data management network element (UDM). The method includes:
receiving first information sent by an AMF, where the first information is used by the AMF to request subscription data of a terminal from the UDM;
sending the subscription data to the AMF, where the subscription data is used by the AMF to access the terminal to a network.

According to a third aspect of the embodiments of the present disclosure, a network access management method is provided, which is performed by a user data repository network element (UDR). The method includes:
receiving second information sent by a UDM, where the second information is used by the UDM to request subscription data of a terminal from the UDR; and
sending the subscription data to the UDM, where the subscription data is to be sent by the UDM to an AMF, and the AMF accesses the terminal to a network according to the subscription data.

According to a fourth aspect of the embodiments of the present disclosure, a network access management method is provided, which is performed by a terminal. The method includes:
sending a registration request to an AMF; and
receiving a registration acceptance message sent by the AMF, where the registration acceptance message includes subscription data of the terminal, and the subscription data notifies the terminal that the AMF accesses the terminal to a network according to the subscription data.

According to a fifth aspect of the embodiments of the present disclosure, a first network access management apparatus is provided, including:
a first receiving module, configured to receive a registration request from a terminal;
a first determining module, configured to determine that the terminal is successfully registered on a unified data management network element (UDM) and determine subscription data of the terminal; and
an access module, configured to access the terminal to a network according to the subscription data.

According to a sixth aspect of the embodiments of the present disclosure, a second network access management apparatus is provided, including:
a second receiving module, configured to receive first information sent by an AMF, where the first information is used by the AMF to request subscription data of a terminal from a UDM; and
a first sending module, configured to send the subscription data to the AMF, where the subscription data is used by the AMF to access the terminal to a network.

According to a seventh aspect of the embodiments of the present disclosure, a third network access management apparatus is provided, including:
a third receiving module, configured to receive second information sent by a UDM, where the second information is used by the UDM to request subscription data of a terminal from a UDR; and
a second sending module, configured to send the subscription data to the UDM, where the subscription data is to be sent by the UDM to the AMF, and the AMF accesses the terminal to a network according to the subscription data.

According to an eighth aspect of the embodiments of the present disclosure, a fourth network access management apparatus is provided, including:
a third sending module, configured to send a registration request to an AMF; and
a fourth receiving module, configured to receive a registration acceptance message sent by the AMF, where the registration reception message includes the subscription data of a terminal, and the subscription data notifies the terminal that the AMF accesses the terminal to a network according to the subscription data.

According to a ninth aspect of the embodiments of the present disclosure, a communication device is provided, including:
one or more processors;
where the processor is configured to call computer instructions to cause the communication device to execute the network access management method provided in the first aspect, the second aspect, the third aspect, or the fourth aspect.

According to a tenth aspect of the embodiments of the present disclosure, a network access management system is provided, including an access and mobility management function network element (AMF), a unified data management network element (UDM), a user data repository network element (UDR) and a terminal, where the AMF is configured to implement the network access management method provided in the first aspect, the UDM is configured to implement the network access management method provided in the second aspect, the UDR is configured to implement the network access management method provided in the third aspect, and the terminal is configured to implement the network access management method provided in the fourth aspect.

According to an eleventh aspect of the embodiments of the present disclosure, a computer-readable storage medium is provided, which stores computer instructions. The computer instructions, when executed on a communication device, cause the communication device to execute the network access management method provided in the first aspect, the second aspect, the third aspect or the fourth aspect.

### BRIEF DESCRIPTION OF THE DRAWINGS

In order to more clearly illustrate the technical solutions in the embodiments of the present disclosure, the accompanying drawings required for describing the embodiments are introduced below. The following drawings are merely some embodiments of the present disclosure and do not impose specific limitations on the protection scope of the present disclosure.
FIG. 1a is a diagram of an example of deployment of an ambient power-enabled Internet of Things according to an embodiment of the present disclosure.
FIG. 1b is a diagram of another example of deployment of an ambient power-enabled Internet of Things according to an embodiment of the present disclosure.
FIG. 2a is a schematic structural diagram of a network access management system according to an embodiment of the present disclosure.
FIG. 2b is a schematic structural diagram of another network access management system according to an embodiment of the present disclosure.
FIG. 2c is a schematic structural diagram of another network access management system according to an embodiment of the present disclosure.
FIG. 3 is a schematic interaction diagram of a network access management method according to an embodiment of the present disclosure.
FIG. 4a is a schematic flow chart of a network access management method according to an embodiment of the present disclosure.
FIG. 4b is a schematic flow chart of another network access management method according to an embodiment of the present disclosure.
FIG. 4c is a schematic flow chart of another network access management method according to an embodiment of the present disclosure.
FIG. 4d is a schematic flow chart of another network access management method according to an embodiment of the present disclosure.
FIG. 4e is a schematic flow chart of another network access management method according to an embodiment of the present disclosure.
FIG. 4f is a schematic flow chart of another network access management method according to an embodiment of the present disclosure.
FIG. 4g is a schematic flow chart of another network access management method according to an embodiment of the present disclosure.
FIG. 4h is a schematic flow chart of another network access management method according to an embodiment of the present disclosure.
FIG. 4i is a schematic flow chart of another network access management method according to an embodiment of the present disclosure.
FIG. 4j is a schematic flow chart of another network access management method according to an embodiment of the present disclosure.
FIG. 4k is a schematic flow chart of another network access management method according to an embodiment of the present disclosure.
FIG. 4l is a schematic flow chart of another network access management method according to an embodiment of the present disclosure.
FIG. 4m is a schematic flow chart of another network access management method according to an embodiment of the present disclosure.
FIG. 5a is a schematic flow chart of another network access management method according to an embodiment of the present disclosure.
FIG. 5b is a schematic flow chart of another network access management method according to an embodiment of the present disclosure.
FIG. 6 is a schematic flow chart of another network access management method according to an embodiment of the present disclosure.
FIG. 7 is a schematic flow chart of another network access management method according to an embodiment of the present disclosure.
FIG. 8 is a schematic structural diagram of a first network access management apparatus provided in an embodiment of the present disclosure.
FIG. 9 is a schematic structural diagram of a second network access management apparatus provided in an embodiment of the present disclosure.
FIG. 10 is a schematic structural diagram of a third network access management apparatus provided in an embodiment of the present disclosure.
FIG. 11 is a schematic structural diagram of a fourth network access management apparatus provided in an embodiment of the present disclosure.
FIG. 12 is a schematic structural diagram of a communication device provided in an embodiment of the present disclosure.

### DETAILED DESCRIPTION

The embodiments of the present disclosure provide a network access management method and apparatus, a system, a communication device, and a medium. In some embodiments, the term "network access management method" may be interchangeable with terms such as "network access method", "management method", "subscription management method", or "communication method"; the term "network access management apparatus" may be interchangeable with terms such as "network access apparatus", "management apparatus", "subscription management apparatus", or "communication apparatus"; and the term "network access management system" may be interchangeable with terms such as "network access system", "management system", "subscription management system", or "communication system".

The embodiments of the present disclosure are not exhaustive and are merely illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined; in addition, the various embodiments may be arbitrarily combined. For example, some or all steps of different embodiments may be arbitrarily combined, and a certain embodiment may be arbitrarily combined with the optional implementation manners of other embodiments.

The terms used in the embodiments of the present disclosure are only for the purpose of describing specific embodiments and are not intended to limit the present disclosure. The singular expressions such as "a", "an", "the", "above", "said", "aforementioned", "this" in the embodiments of the present disclosure also include plural expressions, unless there is a clear contrary indication in the context. The term predefined in the embodiments of the present disclosure can be understood as defined, pre-defined, stored, pre-stored, pre-negotiated, preconfigured, solidified, or pre-burned, etc.

Prefixes such as "first" and "second" in the embodiments of the present disclosure are only used to distinguish different described objects and do not limit the position, order, priority, quantity or content of the described objects. For example, if the described object is a "field", then the ordinal number before the "field" in the "first field" and the "second field" does not limit the position or order between the "fields", and "first" and "second" do not limit whether the "fields" they modify are in the same message, nor do they limit the sequential order of the "first field" and the "second field". For another example, if the described object is a "level", then the ordinal number before the "level" in the "first level" and the "second level" does not limit the priority between the "levels". For another example, the quantity of the described objects is not limited by the ordinal number and may be one or more. Taking the "first device" as an example, the quantity of "devices" may be one or more. Furthermore, the objects modified by different prefixes may be the same or different. For example, if the described object is a "device", then the "first device" and the "second device" may be devices of the same type or different types. For another example, if the described object is "information", then the "first information" and the "second information" may be information of the same content or information of different contents. In summary, the use of prefixes such as ordinal numbers in the embodiments of the present disclosure to distinguish between the described objects does not constitute a limitation on the described objects. For the description of the described objects, reference is made to the contextual description in the claims or embodiments, and the use of such prefixes should not constitute redundant limitations.

In the embodiments of the present disclosure, "multiple" refers to two or more. In the embodiments of the present disclosure, "and/or" is used to describe the association relationship between associated objects, indicating three relationships that may exist independently. For example, "A and/or B" may represent: A exists alone, B exists alone, and both A and B exist simultaneously. In the embodiments of the present disclosure, the descriptive manner such as "at least one (or at least one piece, at least one item) of A1, A2, ..., An" include the scenario where any single one of A1, A2, ..., An exists independently, as well as the scenario where any combination of multiple ones of A1, A2, ..., An exists, and each scenario may exist independently. For example, the description "at least one of A, B, and C " includes the scenarios of A alone, B alone, C alone, the combination of A and B, the combination of A and C, the combination of B and C, and the combination of A, B, and C.

In some embodiments, the descriptive manners such as "in one case, A, in another case, B", or "in response to one case, A, in response to another case, B", may include the following technical solutions depending on the situation: performing A independently of B (i.e., Ain some embodiments); performing B independently of A (i.e., B in some embodiments); performing A and B selectively (i.e., selecting to perform either A or B in some embodiments); and performing both A and B (i.e., A and B in some embodiments). The case is similar when there are more alternatives such as A, B, and C.

In some embodiments, terms such as "in response to...", "in response to determining...", "in the case that...", "at the time of...", " when...", "if...", "in the event that...", etc. may be used interchangeably.

In some embodiments, "including A", "containing A", "for indicating A", and "carrying A" may be interpreted as directly carrying A or indirectly indicating A.

In some embodiments, terms such as "greater than", "greater than or equal to", "above", "higher than", and "not less than" may be replaced with each other, and terms such as "less than", "less than or equal to", "below", "lower than", and "not greater than" may be interchangeable.

In some embodiments, terms such as "network element", "node", "function", "apparatus", "device", "system", "chip", and "chip system" may be used interchangeably.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" may be used interchangeably.

In some embodiments, the terms "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced with a terminal. For example, the various embodiments of the present disclosure may also be applied to a structure in which communication between an access network device, a core network device, or a network device and a terminal is replaced with communication between multiple terminals (which may also be referred to as Device-to-Device (D2D), Vehicle-to-Everything (V2X), etc.). In this case, the terminal may also be configured to have a structure with all or part of the functions of the access network device. In addition, terms such as "uplink" and "downlink" may also be replaced with terms corresponding to inter-terminal communication (e.g., "side"). For example, uplink channels, downlink channels, etc. may be replaced with side channels, and uplinks, downlinks, etc. may be replaced with sidelinks.

In some embodiments, the terminal may be replaced by an access network device, a core network device, or a network device. In this case, the access network device, the core network device, or the network device may have a structure that has all or part of the functions of the terminal.

In some embodiments, the names of information, etc. are not limited to the names described in the embodiments, and terms such as "information", "message", "signal", "signaling", "report", "configuration", "indication", "instruction", "command", "channel", "parameter", "domain", "field", "symbol", "code element (symbol)", "codebook", "codeword", "codepoint", "bit", "data", "program", and "chip" may be used interchangeably.

In some embodiments, the terms "frame", "radio frame", "subframe", "slot", "sub-slot", "mini-slot", "symbol", "code element (symbol)", "transmission time interval (TTI)" and the like may be used interchangeably.

In some embodiments, terms such as "acquire", "get", "obtain", "receive", "transmit", "bidirectional transmission", "send and/or receive" may be interchangeable, and may be interpreted as receiving from other entities, acquiring from a protocol, obtaining through self-processing, autonomous implementation, etc.

In some embodiments, terms such as "send", "transmit", "report", "deliver", "transfer", "bidirectional transfer", "send and/or receive" may be used interchangeably.

In some embodiments, "predetermined" and "preset" may be interpreted as prespecified in a protocol, etc., or may be interpreted as a pre-set action performed by an apparatus, etc.

In some embodiments, determining may be interpreted as estimating, deciding, judging, calculating, computing, processing, deriving, investigating, searching, looking up, search, inquiry, ascertaining, receiving, transmitting, input, output, accessing, resolving, selecting, choosing, establishing, comparing, "assuming", "expecting", "considering", broadcasting, notifying, communicating, forwarding, configuring, reconfiguring, allocating, mapping, assigning, and the like, but is not limited thereto.

In addition, each element, each row, or each column in the table of the embodiments of the present disclosure may be implemented as an independent embodiment, and the combination of any elements, any rows, and any columns may also be implemented as an independent embodiment.

It should be noted that all actions of acquiring signals, information or data in the present disclosure are carried out in compliance with the corresponding data protection laws and policies of the country where they are located and with the authorization given by the owner of the corresponding apparatus.

Although operations are described in a particular order in the accompanying drawings in the embodiments of the present disclosure, this should not be construed as requiring the operations to be performed in the shown specific order or in a serial order, nor as requiring all of the operations shown to be performed to obtain the desired result. In certain circumstances, multitasking and parallel processing may be advantageous. Furthermore, sending multiple pieces of information via the same message may also be advantageous.

Ambient power-enabled IoT (referred to as Ambient IoT or A-IoT) is an IoT service in which IoT devices are powered by energy harvesting/collection, being either batteryless or with limited energy storage capabilities (i.e., using a capacitor), which provides a promising scheme to fulfil the unmet requirements as mentioned above. It enables communication with IoT devices without conventional power sources and/or avoids human intervention for charging or replacing. The research targets Ambient IoT devices characterized by low power consumption and complexity, very small size, and a long life cycle, etc.

Typically, an ambient power-enabled IoT device does not have a conventional battery. The ambient-powered device itself uses energy harvested from wireless radio waves or any other form of energy source that can be harvested in a specific use case. For example, in some cases, an ambient power-enabled IoT device may harvest energy from radio waves, which may come from 5G NR network entities or user equipment. In other cases, an ambient power-enabled IoT device may harvest energy from energy sources such as solar power, light, motion/vibration, heat, pressure, or any other power sources.

Since the ambient power-enabled IoT device does not need conventional batteries, it is also friendly to the environments.

Some potential challenges for ambient power-enabled IoT include: Firstly, the ambient power-enabled IoT device is expected to harvest energy and at the same time, uses the harvested energy to support communication. Secondly, despite constraints such as complexity, size, and power consumption, the ambient power-enabled IoT device needs to have capability to provide sufficient communication services to fulfill the corresponding requirements.

3GPP is a highly secure system, and many algorithms and protocols have been introduced to guarantee not only authentication and confidentiality/privacy, but also other security functionalities such as data integrity and availability. The issue is that existing approach that relies on cryptography may not be applied to A-IoT devices, because these passive and semi-passive devices/tags have such low available power and processing capability, rendering even basic cryptographic algorithms being not applicable.

The Ambient power-enabled IoT device may not have the function or capability for authentication and security processing. In view of this, the embodiments of the present disclosure provide a network access management method and apparatus, a system, a communication device, and a medium to support ambient power-enabled IoT devices/tags that lack sufficient power, authentication processing capabilities, or security processing capabilities, in accessing to mobile networks or non-public networks.

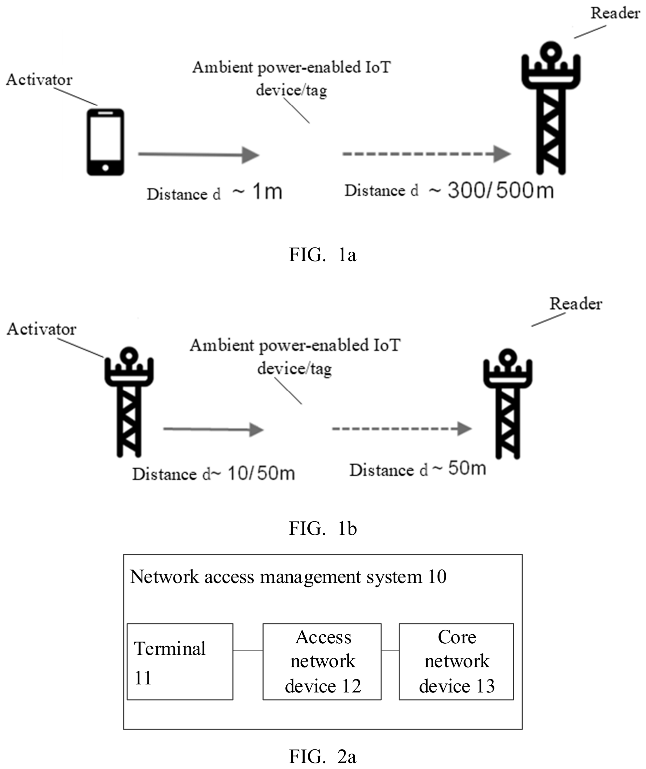

FIG. 1a is a diagram of an example of deployment of an ambient power-enabled Internet of Things according to an embodiment of the present disclosure. As shown in FIG. 1a, an activator may be a terminal, and the terminal provides energy to the ambient power-enabled IoT device/tag, so that the ambient power-enabled IoT device/tag may send information to a reader (reader-writer), such as a base station.

FIG. 1b is a diagram of another example of deployment of an ambient power-enabled Internet of Things according to an embodiment of the present disclosure. As shown in FIG. 1b, the activator may be a base station, and the terminal provides energy to the ambient power-enabled IoT device/tag, so that the ambient power-enabled IoT device/tag may send information to a reader, such as a base station.

In addition to the terminal and base station as shown in FIG. 1a and FIG. 1b, the activator may also be an energy source such as solar energy, light, motion/vibration, heat, pressure, or any other power source, but the activator is not limited thereto.

In addition to the base stations shown in FIGS. 1a and 1b, the reader may also be a terminal, user equipment (UE), subscriber unit, mobile station, station, mobile phone, wearable device, IoT device, vehicle with communication function, smart car, tablet computer (Pad), computer with wireless transceiver function, virtual reality (VR) terminal device, augmented reality (AR) terminal device, wireless terminal device used in industrial control, wireless terminal device used in self-driving, wireless terminal device used in remote medical surgery, wireless terminal device used in smart grid, wireless terminal device used in transportation safety, wireless terminal device used in smart city, and wireless terminal device used in smart home, and the like.

FIG. 2a is a schematic structural diagram of a network access management system 10 according to an embodiment of the present disclosure.

As shown in FIG. 2a, the network access management system includes a terminal 11, an access network device 12, and a core network device 13.

In some embodiments, the terminal is, for example, at least one of a user device, a user unit, a mobile station, a mobile phone, a wearable device, an Internet of Things device, a vehicle with communication function, a smart car, a tablet computer, a computer with wireless transceiver function, a virtual reality terminal device, an augmented reality terminal device, a wireless terminal device in industrial control, a wireless terminal device in unmanned driving, a wireless terminal device in remote surgery, a wireless terminal device in a smart grid, a wireless terminal device in transportation safety, a wireless terminal device in a smart city, and a wireless terminal device in a smart home, but is not limited thereto.

In some embodiments, the access network device is, for example, a node or device that connects a terminal to a wireless network, such as a Radio Access Network (RAN). The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, an access node in a wireless fidelity (WiFi) system, a 5G new radio (NR), a future radio access (FRA), a new radio access technology (RAT), a new radio (NR), a new radio access (RFA), a new radio access (NX), and a future generation radio access (FX). Optionally, the base station may be, for example, a macro base station, a micro base station (also known as a small station), a relay station, an access point, a 5G base station or a future base station, a satellite, a Transmitting and Receiving Point (TRP), a Transmitting Point (TP), a mobile switching center, a Device-to-Device (D2D), a Machine-to-Machine (M2M), an Internet of Things (IoT), a Vehicle-to-Everything (V2X), or other devices that perform base station functions in a communication system, etc., which are not specifically limited in the embodiments of the present disclosure.

In some embodiments, the core network device may be a single device that has the functions of a first network element, a second network element, a third network element, a fourth network element, and a fifth network element, etc., or it may be multiple devices or a group of devices, each having all or part of the functions of the first network element, the second network element, the third network element, the fourth network element, and the fifth network element, etc.

In some embodiments, the first network element is, for example, an Access and Mobility Management Function (AMF).

In some implementations, the access and mobility management function network element is used for access and mobility management of terminals in a mobile network. The name is not limited thereto.

In some embodiments, the second network element is, for example, a Unified Data Management (UDM).

In some implementations, the unified data management network element is used to store user subscription data, authentication, etc. The name is not limited thereto.

In some embodiments, the third network element is, for example, a user data repository (Unified Data Repository, UDR).

In some implementations, the user data repository network element is used to store structured data, such as user subscription data and policy data managed by the UDM, etc. The name is not limited thereto, and it is, for example, a unified data warehouse function network element.

In some embodiments, the fourth network element is, for example, a Session Management Function (SMF).

In some implementations, the session management function network element is used to allocate an IP address to the terminal and is responsible for managing various channels between the terminal and the core network during Internet access. The name is not limited thereto.

In some embodiments, the fifth network element is, for example, a User Plane Function (UPF).

In some implementations, the user plane function network element is responsible for routing and forwarding related functions of user plane data packets in a core network (such as a 5G core network). The name is not limited to thereto.

The following embodiments of the present disclosure may be applied to the network access management system shown in FIG. 2a, or a part of entities thereof, but are not limited thereto. The entities shown in FIG. 2a are examples only. The network access management system may include all or a portion of the entities shown in FIG. 2a, or may include entities other than those in FIG. 2a. The number of entities is arbitrary, and the connections between the various entities are illustrative only. The entities may be connected or disconnected, and the connections may be in any manner, whether direct or indirect, and wired or wireless. Furthermore, the names of the network access management system and the entities therein are not limited.

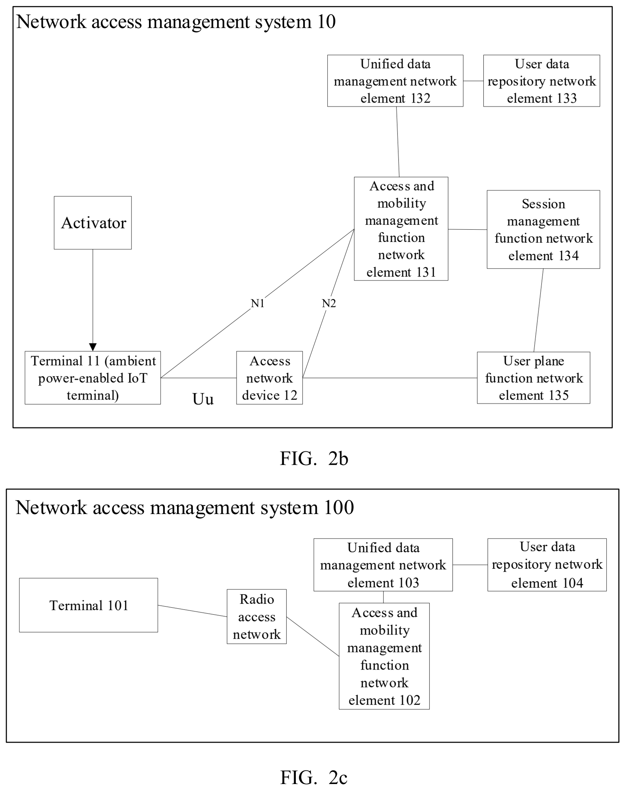

In some implementations, as shown in FIG. 2b, the network access management system 10 includes a terminal 11, an access network device 12 ((R)AN), an access and mobility management function network element (AMF) 131, a unified data management network element (UDM) 132, a user data repository network element (UDR) 133, a session management function network element (SMF) 134, and a user plane function network element (UPF) 135.

In some implementations, as shown in FIG. 2c, the network access management system 100 includes a terminal 101, a wireless access network, an access and mobility management function network element 102, a unified data management network element 103, and a user data repository network element 104. The number of terminals may be one or more.

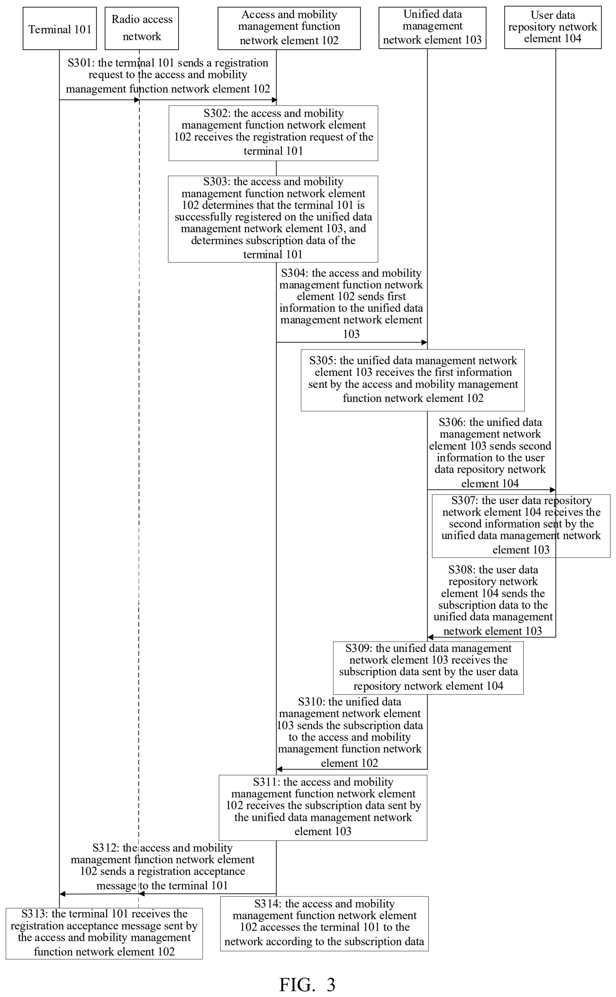

FIG. 3 is a schematic interaction diagram of a network access management method according to an embodiment of the present disclosure. As shown in FIG. 3, the embodiment of the present disclosure relates to a network access management method, which is applied to a network access management system 100. The method includes the following steps.

In step S301, the terminal 101 sends a registration request to the access and mobility management function network element 102.

In some embodiments, the registration request is used by the terminal to register with an AMF.

In some embodiments, the name of the registration request is not limited, and may be, for example, a network access registration request.

In some embodiments, the registration request is used by the terminal to perform network access registration with the AMF.

In some embodiments, the registration request includes a terminal ID.

For example, the terminal ID may be a Subscription concealed identifier (SUCI).

For example, the terminal ID may be a 5G Globally Unique Temporary Identifier (5G-GUTI).

For example, the terminal ID may be a permanent equipment identifier (PEI).

In some implementations, when the terminal sends the registration request to the AMF, it may send the registration request to the AMF via the radio access network element (RAN).

In some embodiments, the radio access network element (RAN) includes but is not limited to the NR and gNB.

In some embodiments, the terminal may be an ambient power-enabled IoT terminal.

In step S302, the access and mobility management function network element 102 receives the registration request of the terminal 101.

In step S303, the access and mobility management function network element 102 determines that the terminal 101 is successfully registered on the unified data management network element 103, and determines the subscription data of the terminal 101.

In some implementations, in response to the AMF determining that the terminal is successfully registered on the UDM, the subscription data of the terminal is determined.

In some implementations, when the AMF determines that the terminal is successfully registered on the UDM, the subscription data of the terminal is determined.

In some implementations, if the AMF determines that the terminal is successfully registered on the UDM, it determines the subscription data of the terminal.

In some implementations, the AMF may determine whether the terminal is successfully registered on the UDM based on the terminal ID in the registration request. If the terminal is successfully registered on the UDM, the AMF may determine the terminal's subscription data. If the terminal is not registered on the UDM, the AMF may register the terminal with the UDM. For example, the AMF registers with the UDM using the signaling Nudm_UECM_Registration, where the signaling Nudm_UECM_Registration is used for registering the terminal. Optionally, the signaling Nudm_UECM_Registration may also be used to subscribe to notifications from the UDM regarding the cancellation of the AMF registration, i.e., to subscribe to AMF deregistration.

In some implementations, if the AMF determines that the terminal is successfully registered on the UDM, the AMF determines the terminal's subscription data. For example, the AMF may locally query whether it has the terminal's subscription data. For example, if the subscription data includes the terminal ID, the AMF may query the subscription data including the terminal ID based on the terminal ID in the registration request. For example, if the subscription data corresponds to the terminal ID, the AMF may query the subscription data corresponding to the terminal ID based on the terminal ID.

In some implementations, if the AMF does not have the subscription data of the terminal locally, the subscription data may be obtained through the subsequent step S304.

In step S304, the access and mobility management function network element 102 sends the first information to the unified data management network element 103.

In some implementations, the first information is used by the AMF to request subscription data from the UDM.

In some implementations, the name of the first information is not limited, and it may be, for example, a subscription data acquisition request.

In some implementations, the first information may include the terminal ID, and the first information is used by the AMF to request the subscription data corresponding to the terminal ID from the UDM.

In some implementations, the AMF retrieves access and mobility subscription data from the UDM through the signaling Nudm_SDM_Get, where the access and mobility subscription data may include subscription data.

In step S305, the unified data management network element 103 receives the first information sent by the access and mobility management function network element 102.

In some implementations, the UDM may store subscription data locally.

In some implementations, the first information may include a terminal ID. The UDM locally queries whether it has corresponding subscription data based on the terminal ID in the first information. If the UDM locally has subscription data corresponding to the terminal ID, the UDM sends the subscription data to the AMF. If the UDM does not locally have subscription data corresponding to the terminal ID, the UDM obtains the subscription data in subsequent step S306.

In step S306, the unified data management network element 103 sends the second information to the user data repository network element 104.

In some implementations, the second information is used by the UDM to request subscription data from the UDR.

In some implementations, the name of the second information is not limited, and it may be, for example, a subscription data acquisition request.

In some implementations, the second information may include the terminal ID, and the second information is used by the UDM to obtain the subscription data corresponding to the terminal ID from the UDR.

In some implementations, the UDM obtains the subscription data from the UDR via the signaling Nudr_DM_Query (SUPI, subscription data).

In step S307, the user data repository network element 104 receives the second information sent by the unified data management network element 103.

In some embodiments, the UDR stores the terminal's subscription data. Thus, in some embodiments, the second information may include the terminal ID. The UDR locally queries the corresponding subscription data based on the terminal ID in the second information. The UDR sends the retrieved subscription data to the UDM.

In step S308, the user data repository network element 104 sends the subscription data to the unified data management network element 103.

In some implementations, the UDR sends the subscription data to the UDM, the UDM sends the subscription data to the AMF, and the AMF accesses the terminal to the network according to the subscription data.

In step S309, the unified data management network element 103 receives the subscription data sent by the user data repository network element 104.

In some implementations, the UDM may store the subscription data sent by the UDR locally.

In some implementations, the UDM may send a third information to the UDR. The third information is used by the UDM to subscribe to the subscription data of the terminal from the UDR. For example, the UDM subscribes to the notification of the subscription data on the UDR through the signaling Nudr_DM_subscribe.

In step S310, the unified data management network element 103 sends the subscription data to the access and mobility management function network element 102.

In step S311, the access and mobility management function network element 102 receives the subscription data sent by the unified data management network element 103.

In some implementations, the AMF may store the subscription data sent by the UMD.

In step S312, the access and mobility management function network element 102 sends a registration acceptance message to the terminal 101.

In some implementations, the registration acceptance message may include subscription data.

In some implementations, the subscription data in the registration acceptance message is used to notify the terminal that the AMF is about to access the terminal to the network based on the subscription data.

In step S313, the terminal 101 receives the registration acceptance message sent by the access and mobility management function network element 102.

In step S314, the access and mobility management function network element 102 accesses the terminal 101 to the network according to the subscription data.

In some implementations, the subscription data includes a first network access indication.

In some implementations, the first network access indication indicates that the terminal is an ambient-powered Internet of Things terminal.

In some implementations, the name of the first network access indication is not limited, and it may be, for example, an ambient-powered Internet of Things terminal indication.

In some implementations, the first network access indication may be represented by a specific device type. For example, it may be represented by Ambient IoT or A-IoT. For example, it may be represented by 0 or 1.

In some implementations, if the subscription data includes the first network access indication, accessing the terminal to the network according to the subscription data may include: skipping a first processing or using a null algorithm to perform the first processing, and accessing the terminal to the network.

In some implementations, the name of the first processing is not limited and may be, for example, an identity verification processing, a legality verification processing, etc.

In some embodiments, the first processing includes an authentication processing, which may be an identity authentication processing.

In some embodiments, the first processing includes a security processing, which may be a legality verification processing, a privacy processing, and the like.

In some embodiments, the first processing includes an authentication processing and a security processing.

In some embodiments, the null algorithm represents an algorithm that does not perform any computational processing steps.

In some implementations, the subscription data includes a second network access indication.

In some implementations, the second network access indication indicates that the first processing is not performed.

In some implementations, the name of the second network access indication is not limited, and may be, for example, a skip processing indication, an omit processing indication, or a no processing indication.

In some implementations, if the subscription data includes the second network access indication, accessing the terminal to the network according to the subscription data may be: skipping the first processing and accessing the terminal to the network.

In some implementations, the subscription data includes a third network access indication.

In some implementations, the third network access indication indicates that the first processing is performed using a null algorithm.

In some implementations, the name of the third network access indication is not limited, and it may be, for example, a null processing indication.

In some implementations, if the subscription data includes the third network indication, accessing the terminal to the network according to the subscription data may be: performing a first processing using a null algorithm to access the terminal to the network.

In some implementations, the subscription data includes a fourth network access indication.

In some implementations, the fourth network access indication represents an allowed area. For example, the fourth network access indication is a cell ID and/or a tracking area ID, where the number of cell IDs or tracking area IDs is not limited.

In some implementations, if the subscription data includes the fourth network access indication, accessing the terminal to the network may include: accessing the terminal to the network within the allowed area.

In some implementations, if the subscription data includes the fourth network access indication, accessing the terminal to the network may include: allowing the terminal to access the network within the allowed area.

In some embodiments, the subscription data includes at least one of the first network access indication, the second network access indication, the third network access indication, and the fourth network access indication. For example, the subscription data includes the first network access indication and the second network access indication, the subscription data includes the first network access indication and the third network access indication, the subscription data includes the first network access indication, the second network access indication, and the fourth network access indication, and the subscription data includes the first network access indication, the third network access indication, and the fourth network access indication. Accordingly, the terminal is accessed to the network according to each network access indication in the subscription data.

In the embodiment of the present disclosure, all or part of steps S304 to S311 are optional, and one or more of these steps may be omitted or replaced in different embodiments.

In some embodiments, the order of steps S303 and S304 may be interchanged, and the order of steps S313 and S314 may be interchanged. Furthermore, step S314 may be implemented as an independent embodiment, steps S301 and S314 may be implemented as an independent embodiment, and steps S301, S303, and S314 may be implemented as an independent embodiment. Steps S301, S302, S304, S311, and S314 may be implemented as an independent embodiment. Steps S301, S302, S304, S306, S309, S311, and S314 may be implemented as an independent embodiment, but are not limited thereto.

By adopting the network access management method described above, terminals that do not have sufficient power, authentication processing capabilities, or security processing capabilities or ambient power-enabled IoT terminals/devices/tags may be supported to access mobile networks or non-public networks based on subscription data.

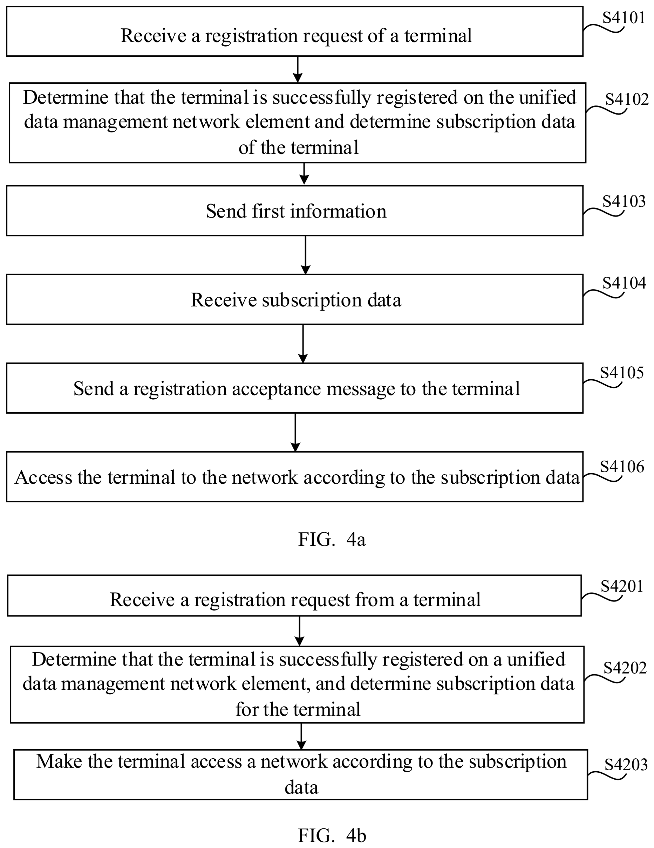

FIG. 4a is a flow chart of a network access management method according to an embodiment of the present disclosure. As shown in FIG. 4a, the embodiment of the present disclosure relates to a network access management method, which is executed by an access and mobility management function network element 102. The method includes the following steps.

In step S4101, a registration request of a terminal is received.

The optional implementations of step S4101 may refer to the optional implementations of step S302 in FIG. 3 and other related parts in the embodiment involved in FIG. 3, which will not be repeated here.

In some implementations, the access and mobility management function network element 102 receives the registration request sent by the terminal 101, but is not limited thereto and may also receive a registration request sent by other entities.

In step S4102, it is determined that the terminal is successfully registered on the unified data management network element and the subscription data of the terminal is determined.

The optional implementations of step S4102 may refer to the optional implementations of step S303 in FIG. 3 and other related parts in the embodiment involved in FIG. 3, which will not be repeated here.

In step S4103, first information is sent.

In some implementations, the access and mobility management function network element 102 sends the first information to the unified data management network element 103, but is not limited thereto, and the first information may also be sent to other entities.

The optional implementations of step S4103 may refer to the optional implementations of step S304 in FIG. 3 and other related parts in the embodiment involved in FIG. 3, which will not be repeated here.

In step S4104, subscription data is received.

In some implementations, the access and mobility management function network element 102 receives the subscription data returned by the unified data management network element 103, but is not limited thereto and may also receive subscription data sent by other entities.

In some embodiments, the access and mobility management function network element 102 obtains subscription data specified by the protocol.

In some embodiments, the access and mobility management function network element 102 obtains subscription data from upper layer(s).

In some embodiments, the access and mobility management function network element 102 performs processing to obtain the subscription data.

In some embodiments, step S4104 is omitted, and the access and mobility management function network element 102 independently implements the function indicated by the subscription data, or the above function is default or preselected.

The optional implementations of step S4104 may refer to the optional implementations of step S311 in FIG. 3 and other related parts in the embodiment involved in FIG. 3, which will not be repeated here.

In step S4105, a registration acceptance message is sent to the terminal.

The optional implementations of step S4105 may refer to the optional implementations of step S312 in FIG. 3 and other related parts in the embodiment involved in FIG. 3, which will not be repeated here.

In step S4106, the terminal is accessed to the network according to the subscription data.

The optional implementations of step S4106 may refer to the optional implementations of step S314 in FIG. 3 and other related parts in the embodiment involved in FIG. 3, which will not be repeated here.

Optionally, the subscription data includes at least one of the following indications:
a first network access indication indicating that the terminal is an ambient power-enabled IoT terminal;
a second network access indication indicating that the first processing is not performed;
a third network access indication indicating that the first processing is performed using the null algorithm; and
a fourth network access indication indicating an allowed area.

Optionally, the subscription data includes the first network access indication, which indicates that the terminal is an ambient power-enabled Internet of Things terminal; accessing the terminal to the network according to the subscription data may be: accessing the terminal to the network by skipping the first processing or using a null algorithm to perform the first processing.

Optionally, the subscription data includes the second network access indication, and the second network access indication indicates that the first processing is not performed. Accessing the terminal to the network according to the subscription data may be: skipping the first processing and accessing the terminal to the network.

Optionally, the subscription data includes the third network access indication, and the third network access indication indicates that the first processing is performed using the null algorithm. Accessing the terminal to the network according to the subscription data may be: accessing the terminal to the network by performing the first processing using the null algorithm.

Optionally, the subscription data includes the fourth network access indication, where the fourth network access indication indicates the allowed area. Accessing the terminal to the network may include: accessing the terminal to the network within the allowed area.

Optionally, the first processing includes an authentication processing and/or a security processing.

The network access management method involved in the embodiment of the present disclosure may include at least one of steps S4101 to S4106. For example, step S4106 may be implemented as an independent embodiment. Steps S4101 and S4106 may be implemented as an independent embodiment, and steps S4101, S4102, and S4106 may be implemented as an independent embodiment, but are not limited thereto.

In some implementations, step S4105 and step S4106 may be performed simultaneously.

In some embodiments, step S4103, step S4104, and step S4105 are optional, and one or more of these steps may be omitted or replaced in different embodiments.

The above-mentioned network access management method can support terminals that do not have sufficient power, authentication processing capabilities, or security processing capabilities or ambient power-enabled IoT terminals/devices/tags to access mobile networks or non-public networks based on subscription data.

FIG. 4b is a flow chart of a network access management method according to an embodiment of the present disclosure. As shown in FIG. 4b, the embodiment of the present disclosure relates to a network access management method, which is executed by the access and mobility management function network element 102. The method includes the following steps.

In step S4201, a registration request of a terminal is received.

The optional implementations of step S4201 may refer to the optional implementations of step S302 of FIG. 3, the optional implementations of step S4101 of FIG. 4a, and other related parts in the embodiments involved in FIG. 3 and FIG. 4a, which will not be described in detail here.

In step S4202, it is determined that the terminal is successfully registered on the unified data management network element and the subscription data of the terminal is determined.

The optional implementations of step S4202 may refer to the optional implementations of step S303 of FIG. 3, the optional implementations of step S4102 of FIG. 4a, and other related parts in the embodiments involved in FIG. 3 and FIG. 4a, which will not be described in detail here.

In step S4203, the terminal is accessed to the network according to the subscription data.

For optional implementations of step S4203, reference may be made to the optional implementations of step S314 of FIG. 3, the optional implementations of step S4106 of FIG. 4a, and other related parts in the embodiments involved in FIG. 3 and FIG. 4a, which will not be described in detail here.

The network access management method involved in the embodiment of the present disclosure may include at least one of steps S4201 to S4203. For example, step S4203 may be implemented as an independent embodiment. Steps S4201 and S4203 may be implemented as an independent embodiment, and steps S4202 and S4203 may be implemented as an independent embodiment, but are not limited thereto.

In some embodiments, step S4201 and step S4202 are optional, and one or more of these steps may be omitted or replaced in different embodiments.

The above-mentioned network access management method can support terminals that do not have sufficient power, authentication processing capabilities, or security processing capabilities or ambient power-enabled IoT terminals/devices/tags to access mobile networks or non-public networks based on subscription data.

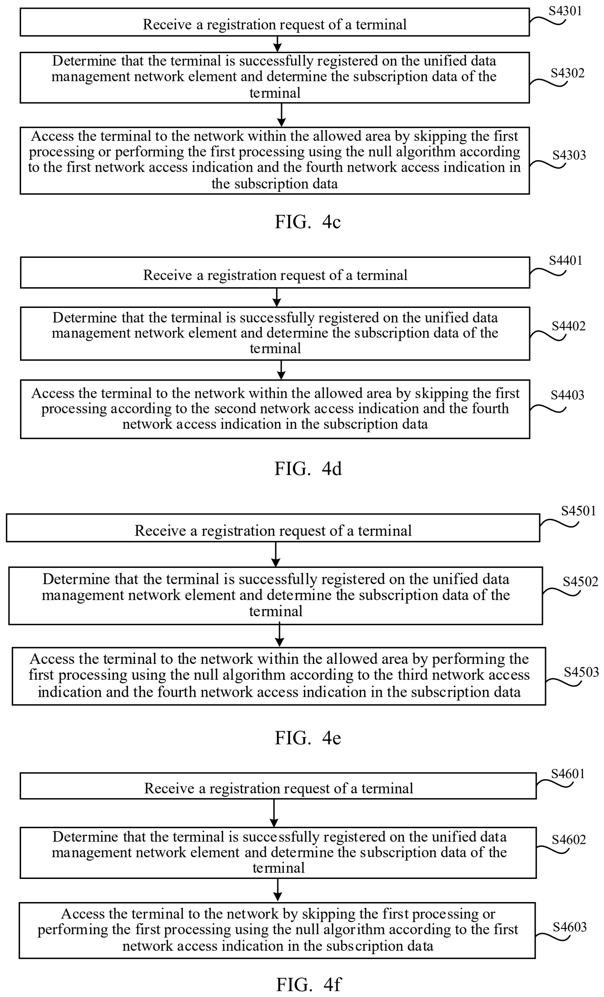

FIG. 4c is a flow chart of a network access management method according to an embodiment of the present disclosure. As shown in FIG. 4c, the embodiment of the present disclosure relates to a network access management method, which is executed by the access and mobility management function network element 102. The method includes the following steps.

In step S4301, a registration request of a terminal is received.

The optional implementations of step S4301 may refer to the optional implementations of step S302 of FIG. 3, the optional implementations of step S4101 of FIG. 4a, and other related parts in the embodiments involved in FIG. 3 and FIG. 4a, which will not be described in detail here.

In step S4302, it is determined that the terminal is successfully registered on the unified data management network element and the subscription data of the terminal is determined.

The optional implementations of step S4302 may refer to the optional implementations of step S303 of FIG. 3, the optional implementations of step S4102 of FIG. 4a, and other related parts in the embodiments involved in FIG. 3 and FIG. 4a, which will not be described in detail here.

In step S4303, the terminal is accessed to the network within the allowed area by skipping the first processing or performing the first processing using the null algorithm according to the first network access indication and the fourth network access indication in the subscription data.

For optional implementations of step S4303, reference may be made to the optional implementations of step S314 in FIG. 3, the optional implementations of step S4106 in FIG. 4a, and other related parts in the embodiments involved in FIGS. 3 and 4a, which will not be repeated here.

The network access management method involved in the embodiment of the present disclosure may include at least one of steps S4301 to S4303. For example, step S4303 may be implemented as an independent embodiment. Steps S4301 and S4303 may be implemented as an independent embodiment, and steps S4302 and S4303 may be implemented as an independent embodiment, but are not limited thereto.

In some embodiments, step S4301 and step S4302 are optional, and one or more of these steps may be omitted or replaced in different embodiments.

FIG. 4d is a flow chart of a network access management method according to an embodiment of the present disclosure. As shown in FIG. 4d, the embodiment of the present disclosure relates to a network access management method, which is executed by the access and mobility management function network element 102. The method includes the following steps.

In step S4401, a registration request of a terminal is received.

The optional implementations of step S4401 may refer to the optional implementations of step S302 of FIG. 3, the optional implementations of step S4101 of FIG. 4a, and other related parts in the embodiments involved in FIG. 3 and FIG. 4a, which will not be described in detail here.

In step S4402, it is determined that the terminal is successfully registered on the unified data management network element and the subscription data of the terminal is determined.

The optional implementations of step S4402 may refer to the optional implementations of step S303 of FIG. 3, the optional implementations of step S4102 of FIG. 4a, and other related parts in the embodiments involved in FIG. 3 and FIG. 4a, which will not be described in detail here.

In step S4403, the terminal is accessed to the network within the allowed area by skipping the first processing according to the second network access indication and the fourth network access indication in the subscription data.

For optional implementations of step S4403, reference may be made to the optional implementations of step S314 in FIG. 3, the optional implementations of step S4106 in FIG. 4a, and other related parts in the embodiments involved in FIGS. 3 and 4a, which will not be repeated here.

The network access management method involved in the embodiments of the present disclosure may include at least one of steps S4401 to S4403. For example, step S4403 may be implemented as an independent embodiment. Steps S4401 and S4403 may be implemented as an independent embodiment, and steps S4402 and S4403 may be implemented as an independent embodiment, but are not limited thereto.

In some embodiments, step S4401 and step S4402 are optional, and one or more of these steps may be omitted or replaced in different embodiments.

FIG. 4e is a flow chart of a network access management method according to an embodiment of the present disclosure. As shown in FIG. 4e, the embodiment of the present disclosure relates to a network access management method, which is executed by the access and mobility management function network element 102. The method includes the following steps.

In step S4501, a registration request of a terminal is received.

The optional implementations of step S4501 may refer to the optional implementations of step S302 of FIG. 3, the optional implementations of step S4101 of FIG. 4a, and other related parts in the embodiments involved in FIG. 3 and FIG. 4a, which will not be described in detail here.

In step S4502, it is determined that the terminal is successfully registered on the unified data management network element and the subscription data of the terminal is determined.

The optional implementations of step S4502 may refer to the optional implementations of step S303 of FIG. 3, the optional implementations of step S4102 of FIG. 4a, and other related parts in the embodiments involved in FIG. 3 and FIG. 4a, which will not be described in detail here.

In step S4503, the terminal is accessed to the network within the allowed area by performing the first processing using the null algorithm according to the third network access indication and the fourth network access indication in the subscription data.

For optional implementations of step S4503, reference may be made to the optional implementations of step S314 of FIG. 3, the optional implementations of step S4106 of FIG. 4a, and other related parts in the embodiments involved in FIG. 3 and FIG. 4a, which will not be described in detail here.

The network access management method involved in the embodiments of the present disclosure may include at least one of steps S4501 to S4503. For example, step S4503 may be implemented as an independent embodiment. Steps S4501 and S4503 may be implemented as an independent embodiment, and steps S4502 and S4503 may be implemented as an independent embodiment, but are not limited thereto.

In some embodiments, step S4501 and step S4502 are optional, and one or more of these steps may be omitted or replaced in different embodiments.

FIG. 4f is a flow chart of a network access management method according to an embodiment of the present disclosure. As shown in FIG. 4f, the embodiment of the present disclosure relates to a network access management method, which is executed by the access and mobility management function network element 102. The method includes the following steps.

In step S4601, a registration request of a terminal is received.

The optional implementations of step S4601 may refer to the optional implementations of step S302 of FIG. 3, the optional implementations of step S4101 of FIG. 4a, and other related parts in the embodiments involved in FIG. 3 and FIG. 4a, which will not be described in detail here.

In step S4602, it is determined that the terminal is successfully registered on the unified data management network element and the subscription data of the terminal is determined.

The optional implementations of step S4602 may refer to the optional implementations of step S303 of FIG. 3, the optional implementations of step S4102 of FIG. 4a, and other related parts in the embodiments involved in FIG. 3 and FIG. 4a, which will not be described in detail here.

In step S4603, the terminal is accessed to the network by skipping the first processing or performing the first processing using the null algorithm according to the first network access indication in the subscription data.

For the optional implementations of step S4603, reference may be made to the optional implementations of step S314 in FIG. 3, the optional implementations of step S4106 in FIG. 4a, and other related parts in the embodiments involved in FIG. 3 and FIG. 4a, which will not be repeated here.

The network access management method involved in the embodiment of the present disclosure may include at least one of steps S4601 to S4603. For example, step S4603 may be implemented as an independent embodiment. Steps S4601 and S4603 may be implemented as an independent embodiment, and steps S4602 and S4603 may be implemented as an independent embodiment, but are not limited thereto.

In some embodiments, step S4601 and step S4602 are optional, and one or more of these steps may be omitted or replaced in different embodiments.

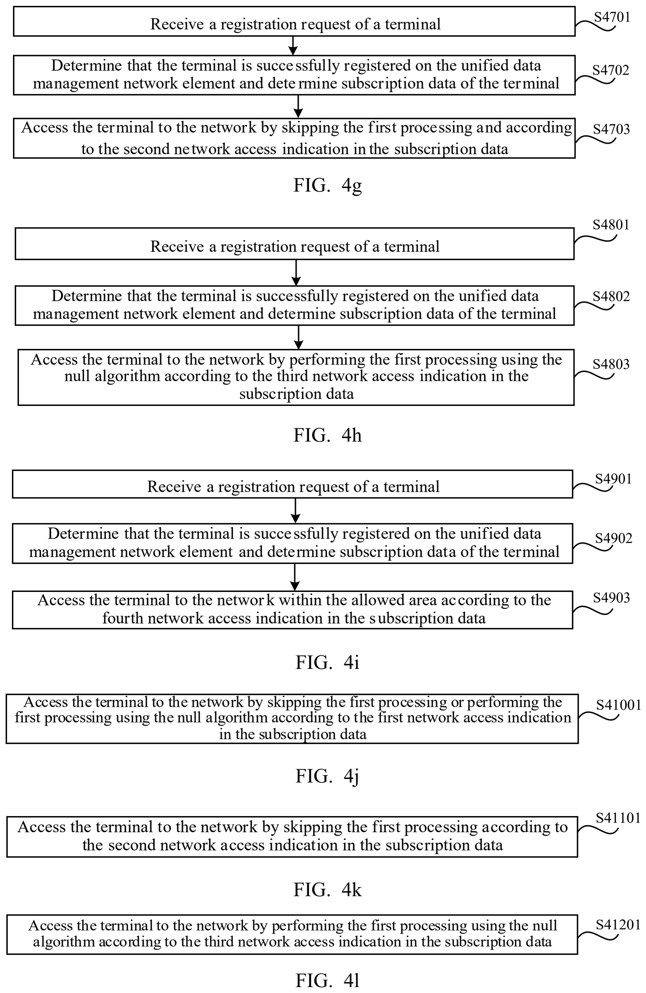

FIG. 4g is a flow chart of a network access management method according to an embodiment of the present disclosure. As shown in FIG. 4g, the embodiment of the present disclosure relates to a network access management method, which is executed by the access and mobility management function network element 102. The method includes the following steps.

In step S4701, a registration request of a terminal is received.

The optional implementations of step S4701 may refer to the optional implementations of step S302 of FIG. 3, the optional implementations of step S4101 of FIG. 4a, and other related parts in the embodiments involved in FIG. 3 and FIG. 4a, which will not be described in detail here.

In step S4702, it is determined that the terminal is successfully registered on the unified data management network element and the subscription data of the terminal is determined.

The optional implementations of step S4702 may refer to the optional implementations of step S303 of FIG. 3, the optional implementations of step S4102 of FIG. 4a, and other related parts in the embodiments involved in FIG. 3 and FIG. 4a, which will not be described in detail here.

In step S4703, the terminal is accessed to the network by skipping the first processing according to the second network access indication in the subscription data.

For the optional implementations of step S4703, reference may be made to the optional implementations of step S314 in FIG. 3, the optional implementations of step S4106 in FIG. 4a, and other related parts in the embodiments involved in FIG. 3 and FIG. 4a, which will not be repeated here.

The network access management method involved in the embodiment of the present disclosure may include at least one of steps S4701 to S4703. For example, step S4703 may be implemented as an independent embodiment. Steps S4701 and S4703 may be implemented as an independent embodiment, and steps S4702 and S4703 may be implemented as an independent embodiment, but are not limited thereto.

In some embodiments, step S470 1 and step S4702 are optional, and one or more of these steps may be omitted or replaced in different embodiments.

FIG. 4h is a flow chart of a network access management method according to an embodiment of the present disclosure. As shown in FIG. 4h, the embodiment of the present disclosure relates to a network access management method, which is executed by the access and mobility management function network element 102. The method includes the following steps.

In step S4801, a registration request of a terminal is received.

The optional implementations of step S4801 may refer to the optional implementations of step S302 of FIG. 3, the optional implementations of step S4101 of FIG. 4a, and other related parts in the embodiments involved in FIG. 3 and FIG. 4a, which will not be described in detail here.

In step S4802, it is determined that the terminal is successfully registered on the unified data management network element and the subscription data of the terminal is determined.

The optional implementations of step S4802 may refer to the optional implementations of step S303 of FIG. 3, the optional implementations of step S4102 of FIG. 4a, and other related parts in the embodiments involved in FIG. 3 and FIG. 4a, which will not be described in detail here.

In step S4803, the terminal is accessed to the network by performing the first processing using the null algorithm according to the third network access indication in the subscription data.

For the optional implementations of step S4803, reference may be made to the optional implementations of step S314 in FIG. 3, the optional implementations of step S4106 in FIG. 4a, and other related parts in the embodiments involved in FIG. 3 and FIG. 4a, which will not be repeated here.

The network access management method involved in the embodiment of the present disclosure may include at least one of steps S4801 to S4803. For example, step S4803 may be implemented as an independent embodiment. Steps S4801 and S4803 may be implemented as an independent embodiment, and steps S4802 and S4803 may be implemented as an independent embodiment, but are not limited thereto.

In some embodiments, step S4801 and step S4802 are optional, and one or more of these steps may be omitted or replaced in different embodiments.

FIG. 4i is a flow chart of a network access management method according to an embodiment of the present disclosure. As shown in FIG. 4i, the embodiment of the present disclosure relates to a network access management method, which is executed by the access and mobility management function network element 102. The method includes the following steps.

In step S4901, a registration request of a terminal is received.

The optional implementations of step S4901 may refer to the optional implementations of step S302 of FIG. 3, the optional implementations of step S4101 of FIG. 4a, and other related parts in the embodiments involved in FIG. 3 and FIG. 4a, which will not be described in detail here.

In step S4902, it is determined that the terminal is successfully registered on the unified data management network element and the subscription data of the terminal is determined.

The optional implementations of step S4902 may refer to the optional implementations of step S303 of FIG. 3, the optional implementation of step S4102 of FIG. 4a, and other related parts in the embodiments involved in FIG. 3 and FIG. 4a, which will not be described in detail here.

In step S4903, the terminal is accessed to the network within the allowed area according to the fourth network access indication in the subscription data.

For the optional implementations of step S4903, reference may be made to the optional implementations of step S314 in FIG. 3, the optional implementations of step S4106 in FIG. 4a, and other related parts in the embodiments involved in FIG. 3 and FIG. 4a, which will not be repeated here.

The network access management method involved in the embodiment of the present disclosure may include at least one of steps S4901 to S4903. For example, step S4903 may be implemented as an independent embodiment. Steps S4901 and S4903 may be implemented as an independent embodiment, and steps S4902 and S4903 may be implemented as an independent embodiment, but are not limited thereto.

In some embodiments, step S4901 and step S4902 are optional, and one or more of these steps may be omitted or replaced in different embodiments.

FIG. 4j is a flow chart of a network access management method according to an embodiment of the present disclosure. As shown in FIG. 4j, the embodiment of the present disclosure relates to a network access management method, which is executed by the access and mobility management function network element 102. The method includes the following steps.

In step S41001, the terminal is accessed to the network by skipping the first processing or performing the first processing using the null algorithm according to the first network access indication in the subscription data.

For optional implementations of step S41001, reference may be made to the optional implementations of step S314 in FIG. 3, the optional implementations of step S4106 in FIG. 4a, and other related parts in the embodiments involved in FIG. 3 and FIG. 4a, which will not be described in detail here.

FIG. 4k is a flow chart of a network access management method according to an embodiment of the present disclosure. As shown in FIG. 4K, the embodiment of the present disclosure relates to a network access management method, which is executed by the access and mobility management function network element 102. The method includes the following steps.

In Step S41101, and the terminal is accessed to the network by skipping the first processing according to the second network access indication in the subscription data.

For optional implementations of step S41101, reference may be made to the optional implementations of step S314 in FIG. 3, the optional implementations of step S4106 in FIG. 4a, and other related parts in the embodiments involved in FIG. 3 and FIG. 4a, which will not be repeated here.

FIG. 4l is a flow chart of a network access management method according to an embodiment of the present disclosure. As shown in FIG. 4l, the embodiment of the present disclosure relates to a network access management method, which is executed by the access and mobility management function network element 102. The method includes the following steps.

In step S41201, the terminal is accessed to the network by performing the first processing using the null algorithm according to the third network access indication in the subscription data.

For optional implementations of step S41201, reference may be made to the optional implementations of step S314 in FIG. 3, the optional implementations of step S4106 in FIG. 4a, and other related parts in the embodiments involved in FIG. 3 and FIG. 4a, which will not be repeated here.

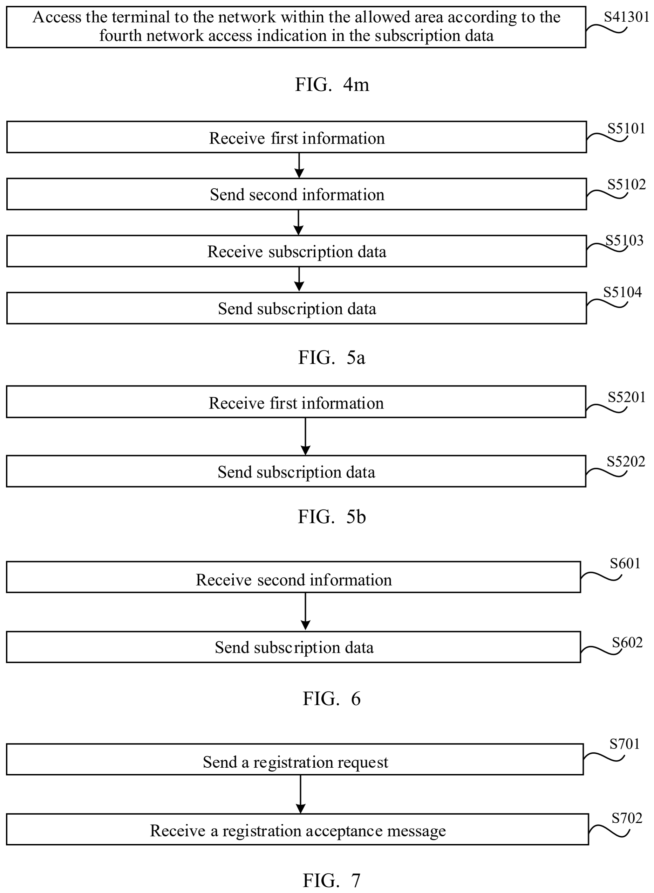

FIG. 4m is a flow chart of a network access management method according to an embodiment of the present disclosure. As shown in FIG. 4m, the embodiment of the present disclosure relates to a network access management method, which is executed by the access and mobility management function network element 102. The method includes the following steps.

In step S41301, the terminal is accessed to the network within the allowed area according to the fourth network access indication in the subscription data.

For optional implementations of step S41301, reference may be made to the optional implementations of step S314 of FIG. 3, the optional implementations of step S4106 of FIG. 4a, and other related parts in the embodiments involved in FIG. 3 and FIG. 4a, which will not be described in detail here.

In an embodiment of the present disclosure, step S41301 may be combined with step S41001 of FIG. 4j, step S41301 may be combined with step S41101 of FIG. 4k, and step S41301 may be combined with step S41201 of FIG. 4l.

FIG. 5a is a flow chart of a network access management method according to an embodiment of the present disclosure. As shown in FIG. 5a, the embodiment of the present disclosure relates to a network access management method, which is executed by a unified data management network element 103. The method includes the following steps.

In step S5101, first information is received.

In some implementations, the unified data management network element 103 receives the first information sent by the access and mobility management function network element 102, but is not limited thereto and may also receive the first information sent by other entities.

The optional implementations of step S5101 may refer to the optional implementations of step S305 in FIG. 3 and other related parts in the embodiment involved in FIG. 3, which will not be described in detail here.

In step S5102, second information is sent.

In some implementations, the unified data management network element 103 sends the second information to the user data repository network element 104, but is not limited thereto, and the second information may also be sent to other entities.

For optional implementations of step S5102, reference may be made to the optional implementations of step S306 in FIG. 3 and other related parts in the embodiment involved in FIG. 3, which will not be described in detail here.

In step S5103, subscription data is received.

In some implementations, the unified data management network element 103 receives the subscription data sent by the user data repository network element 104, but is not limited thereto and may also receive the subscription data sent by other entities.

For optional implementations of step S5103, reference may be made to the optional implementations of step S309 in FIG. 3 and other related parts in the embodiment involved in FIG. 3, which will not be described in detail here.

In some embodiments, the unified data management network element 103 obtains the subscription data specified by the protocol.

In some embodiments, the unified data management network element 103 obtains the subscription data from upper layer(s).

In some embodiments, the unified data management network element 103 performs processing to obtain the subscription data.

In some embodiments, step S5103 is omitted, and the unified data management network element 103 independently implements the function indicated by the subscription data, or the above function is default or preselected.

Optionally, the subscription data includes at least one of the following indications:
a first network access indication indicating that the terminal is an ambient power-enabled IoT terminal;
a second network access indication indicating that the first processing is not performed;
a third network access indication indicating that the first processing is performed using the null algorithm; and
a fourth network access indication indicating an allowed area.

Optionally, the first processing includes an authentication processing and/or a security processing.

In step S5104, subscription data is sent.

In some implementations, the unified data management network element 103 sends the subscription data to the access and mobility management function network element 102.

For optional implementations of steps S5104, reference may be made to the optional implementations of step S310 in FIG. 3 and other related parts in the embodiment involved in FIG. 3, which will not be described in detail here.

The network access management method involved in the embodiment of the present disclosure may include at least one of steps S5101 to S5104. For example, step S5104 may be implemented as an independent embodiment. Steps S5101 and S5104 may be implemented as an independent embodiment, but are not limited thereto.

In some embodiments, step S5102 and step S5103 are optional, and one or more of these steps may be omitted or replaced in different embodiments.

The above-mentioned network access management method may support terminals that do not have sufficient power, authentication processing capabilities, or security processing capabilities or ambient power-enabled IoT terminals/devices/tags to access mobile networks or non-public networks based on subscription data.

FIG. 5b is a flow chart of a network access management method according to an embodiment of the present disclosure. As shown in FIG. 5b, the embodiment of the present disclosure relates to a network access management method, which is executed by a unified data management network element 103. The method includes the following steps.

In step S5201, first information is received.

In some implementations, the unified data management network element 103 receives the first information sent by the access and mobility management function network element 102, but is not limited thereto and may also receive the first information sent by other entities.

For optional implementations of step S5201, reference may be made to the optional implementations of step S305 in FIG. 3, the optional implementations of step S5101 in FIG. 5a, and other related parts in the embodiments involved in FIG. 3 and FIG. 5a, which will not be described in detail here.

In step S5202, subscription data is sent.

In some implementations, the unified data management network element 103 sends the subscription data to the access and mobility management function network element 102.

For optional implementations of step S5202, reference may be made to the optional implementations of step S310 in FIG. 3, the optional implementations of step S5104 in FIG. 5a, and other related parts in the embodiments involved in FIG. 3 and FIG. 5a, which will not be described in detail here.

The network access management method involved in the embodiment of the present disclosure may include at least one of steps S5201 to S5202. For example, step S5202 may be implemented as an independent embodiment, but is not limited thereto.

In some embodiments, step S5201 is optional and may be omitted or replaced in different embodiments.

The above-mentioned network access management method can support terminals that do not have sufficient power, authentication processing capabilities, or security processing capabilities or ambient power-enabled IoT terminals/devices/tags to access mobile networks or non-public networks based on subscription data.

FIG. 6 is a flow chart of a network access management method according to an embodiment of the present disclosure. As shown in FIG. 6, the embodiment of the present disclosure relates to a network access management method, which is executed by a user data repository network element 104. The method includes the following steps.

In step S601, second information is received.

In some implementations, the user data repository network element 104 receives the second information sent by the unified data management network element 103, but is not limited thereto and may also receive the second information sent by other entities.

The optional implementations of step S601 may refer to the optional implementations of step S307 in FIG. 3 and other related parts in the embodiment involved in FIG. 3, which will not be described in detail here.

In step S602, subscription data is sent.

In some implementations, the user data repository network element 104 sends the subscription data to the unified data management network element 103, but is not limited thereto and the subscription data may also be sent to other entities.

The optional implementations of step S602 may refer to the optional implementations of step S308 in FIG. 3 and other related parts in the embodiment involved in FIG. 3, which will not be described in detail here.

Optionally, the user data repository network element 104 stores subscription data.

Optionally, the subscription data includes at least one of the following indications:
a first network access indication indicating that the terminal is an ambient power-enabled IoT terminal;
a second network access indication indicating that the first processing is not performed;
a third network access indication indicating that the first processing is performed using the null algorithm; and
a fourth network access indication indicating an allowed area.

Optionally, the first processing includes an authentication processing and/or a security processing.

The above-mentioned network access management method may support terminals that do not have sufficient power, authentication processing capabilities, or security processing capabilities or ambient power-enabled IoT terminals/devices/tags to access mobile networks or non-public networks based on subscription data.

FIG. 7 is a flow chart of a network access management method according to an embodiment of the present disclosure. As shown in FIG. 7, the embodiment of the present disclosure relates to a network access management method, which is executed by terminal 101 and includes the following steps.

In step S701, a registration request is sent.

In some implementations, the terminal 101 sends the registration request to the access and mobility management function network element 102, but is not limited thereto, and the registration request may also be sent to other entities.

The optional implementations of step S701 may refer to the optional implementations of step S301 in FIG. 3 and other related parts in the embodiment involved in FIG. 3, which will not be described in detail here.

In step S702, a registration acceptance message is received.

In some implementations, the terminal 101 receives the registration acceptance message sent by the access and mobility management function network element 102, but is not limited thereto and may also receive a registration acceptance message sent by other entities.

The optional implementations of step S702 may refer to the optional implementations of step S313 in FIG. 3 and other related parts in the embodiment involved in FIG. 3, which will not be described in detail here.

Optionally, the registration reception message includes the subscription data of the terminal, and the subscription data is used to notify the terminal that the AMF accesses the terminal to the network according to the subscription data.

Optionally, the subscription data includes at least one of the following indications:
a first network access indication indicating that the terminal is an ambient power-enabled IoT terminal;
a second network access indication indicating that the first processing is not performed;
a third network access indication indicating that the first processing is performed using the null algorithm; and
a fourth network access indication indicating an allowed area.

Optionally, the first processing includes an authentication processing and/or a security processing.

The above-mentioned network access management method can support terminals that do not have sufficient power, authentication processing capabilities, or security processing capabilities or ambient power-enabled IoT terminals/devices/tags to access mobile networks or non-public networks based on subscription data.

The present disclosure also provides a network access management method, including the following steps.

The UE sends a registration request to the AMF via the RAN (e.g., NR gNB). The registration request includes the UE ID, such as an SUCI or a 5G-GUTI or a PEI.

The AMF registers with the UDM using Nudm_UECM_Registration to register the UE using Nudm_UECM_Registration (and subscribes to notifications when the UDM deregisters the AMF).

After the AMF has successfully completed the Nudm_UECM_Registration operation, and if the AMF does not have the subscription data for the UE, the AMF uses Nudm_SDM_Get to obtain the access and mobility subscription data from the UDM. If the UDM does not have the subscription data for the UE, the UDM may obtain the subscription data from the UDR through Nudr_ DM_Query (SUPI, subscription data) and may subscribe to notifications of these data on the UDR through Nudr_DM_subscribe. The subscription data of the ambient power-enabled IoT device/tag includes the UE's ID, the allowed area (e.g., indicated by the cell ID, tracking area ID), the ambient power-enabled IoT device indication (e.g., indicated by a specific device type), and/or the no-authentication and security indication.

After the AMF receives the subscription of the ambient power-enabled IoT device from UDM, AMF allows the ambient power-enabled IoT device to access the network in the allowed area, and does not need to authenticate and use any security processing, or just uses the null algorithm for the ambient power-enabled IoT device in the allowed area.

The AMF sends a request accept (Registration Accept) to the UE via the RAN to complete the registration procedure. The Registration Accept includes information indicating permission to not authenticate and not to use any security processing, or to just use a null algorithm for the ambient power-enabled IoT devices within the allowed area.

In the embodiments of the present disclosure, some or all of the steps and their optional implementations may be arbitrarily combined with some or all of the steps in other embodiments, or may be arbitrarily combined with the optional implementations of other embodiments.

The above-mentioned network access management method may support terminals that do not have sufficient power, authentication processing capabilities, or security processing capabilities or ambient power-enabled IoT terminals/devices/tags to access mobile networks or non-public networks based on subscription data.

An embodiment of the present disclosure also provides an apparatus for implementing any of the above methods. For example, an apparatus is provided, including units for implementing various steps performed by the terminal in any of the above methods. For another example, another apparatus is provided, including units for implementing various steps performed by the network device (e.g., AMF, UDM, UDR, etc.) in any of the above methods.

It should be understood that the division of the units in the above apparatus is only a division of logical functions. In practical implementation, all or part of them can be integrated into one physical entity, or they can be physically separated. Furthermore, the units in the apparatus can be implemented in the form of software called by a processor: for example, the apparatus includes a processor connected to a memory, the memory stores computer instructions, and the processor calls the computer instructions stored in the memory to implement any of the above methods or to implement the functions of the units of the above apparatus, where the processor is, for example, a general-purpose processor, such as a Central Processing Unit (CPU) or a microprocessor, and the memory is an internal memory or an external memory of the apparatus. Alternatively, the units in the apparatus can be implemented in the form of hardware circuits. The functions of some or all of the units can be implemented through the design of the hardware circuits. The above hardware circuit can be understood as one or more processors; for example, in one implementation, the above hardware circuit is an application-specific integrated circuit (ASIC), and the functions of some or all of the above units are implemented through the design of the logical relationship between the components within the circuit; in another example, in another implementation, the above hardware circuit can be implemented by a programmable logic device (PLD). Taking a Field Programmable Gate Array (FPGA) as an example, it can include a large number of logic gate circuits, and the connection relationship between the logic gate circuits is configured through a configuration file, thereby implementing the functions of some or all of the above units. All units of the above apparatus can be entirely implemented in the form of software called by a processor, or entirely implemented in the form of hardware circuits, or partially implemented in the form of software called by a processor, with the remaining part implemented in the form of hardware circuits.

In the embodiments of the present disclosure, the processor is a circuit with signal processing capability. In one implementation, the processor may be a circuit with instruction reading and execution capabilities, such as a Central Processing Unit (CPU), a microprocessor, a graphics processing unit (GPU) (which can be understood as a type of microprocessor), or a digital signal processor (DSP), etc. In another implementation, the processor can realize certain functions through the logical relationship of a hardware circuit. The logical relationship of the above hardware circuit is fixed or reconfigurable, for example, the processor is a hardware circuit implemented by an application-specific integrated circuit (ASIC) or a programmable logic device (PLD), such as an FPGA. In a reconfigurable hardware circuit, the process by which the processor loads a configuration file to realize the hardware circuit configuration can be understood as the process by which the processor loads instructions to realize the functions of some or all of the above units. In addition, it can also be a hardware circuit designed for artificial intelligence, which can be understood as a type of ASIC, such as a Neural Network Processing Unit (NPU), a Tensor Processing Unit (TPU), a Deep learning Processing Unit (DPU), and so on.

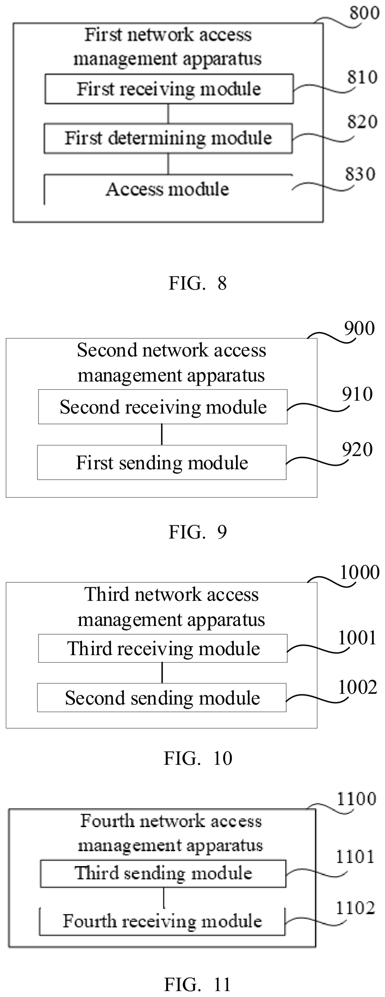

FIG. 8 is a schematic diagram of the structure of a first network access management apparatus provided by an embodiment of the present disclosure. As shown in FIG. 8, the first network access management apparatus 800 includes:
a first receiving module 810, configured to receive a registration request from a terminal;
a first determining module 820, configured to determine that the terminal is successfully registered on a unified data management network element (UDM) and determine subscription data of the terminal; and
an access module 830, configured to access the terminal to a network according to the subscription data.

In some embodiments, the subscription data includes a first network access indication, where the first network access indication indicates that the terminal is an ambient power-enabled Internet of Things terminal.

The access module 830 is configured to access the terminal to the network by skipping the first processing or performing the first processing using a null algorithm. The first processing includes an authentication processing and/or a security processing.

In some embodiments, the subscription data includes a second network access indication, where the second network access indication indicates that a first processing is not performed, where the first processing includes an authentication processing and/or a security processing.

The access module 830 is configured to access the terminal to the network by skipping the first processing.

In some embodiments, the subscription data includes a third network access indication, where the third network access indication indicates that a first processing is performed using a null algorithm, where the first processing includes an authentication processing and/or a security processing.

The access module 830 is configured to access the terminal to the network by performing the first processing using the null algorithm.

In some embodiments, the subscription data further includes a fourth network access indication, where the fourth network access indication indicates an allowed area.

The access module 830 is configured to access the terminal to the network within the allowed area.

In some implementations, the fourth network access indication is a cell ID and/or a tracking area ID.

In some embodiments, the apparatus 800 further includes:
a fourth sending module, configured to send first information to the UDM, where the first information is used by the AMF to request the UDM for the subscription data;
a fifth receiving module, configured to receive the subscription data returned by the UDM; and
a fifth sending module, configured to send a registration acceptance message to the terminal.

In some implementations, the registration acceptance message includes the subscription data.

FIG. 9 is a schematic diagram of the structure of a second network access management apparatus provided in an embodiment of the present disclosure. As shown in FIG. 9, the second network access management apparatus 900 includes:
a second receiving module 910, configured to receive first information sent by an AMF, where the first information is used by the AMF to request subscription data of the terminal from a UDM; and
a first sending module 920, configured to send the subscription data to the AMF, where the subscription data is used by the AMF to access the terminal to a network.

In some embodiments, the apparatus 900 includes:
a sixth sending module, configured to send second information to a user data repository network element (UDR), where the second information is used by the UDM to request the subscription data from the UDR;
a sixth receiving module, configured to receive the subscription data returned by the UDR; and
a storage module, configured to store the subscription data.

In some embodiments, the subscription data includes at least one following indications:
a first network access indication indicating that the terminal is an ambient power-enabled Internet of Things terminal;
a second network access indication indicating that a first processing is not performed, where the first processing includes an authentication processing and/or a security processing;
a third network access indication indicating that the first processing is performed using a null algorithm; and
a fourth network access indication indicating an allowed area.

In some embodiments, the apparatus 900 includes:
a seventh sending module, configured to send third information to the UDR, where the third information is used by the UDM to subscribe to the subscription data of the terminal from the UDR.

FIG. 10 is a schematic diagram of the structure of a third network access management apparatus provided in an embodiment of the present disclosure. As shown in FIG. 10, the third network access management apparatus 1000 includes:
a third receiving module 1001, configured to receive second information sent by a UDM, where the second information is used by the UDM to request subscription data of a terminal 1002 from a UDR for the subscription data 1002 of the terminal; and
a second sending module, configured to send the subscription data to the UDM, where the subscription data is to be sent by the UDM to the AMF, and the AMF accesses the terminal to the network according to the subscription data.

In some embodiments, the subscription data includes at least one of following indications:
a first network access indication indicating that the terminal is an ambient power-enabled Internet of Things terminal;
a second network access indication indicating that a first processing is not performed, where the first processing includes an authentication processing and/or a security processing;
a third network access indication indicating that the first processing is performed using a null algorithm; and
a fourth network access indication indicating an allowed area.

In some implementations, the UDR stores the subscription data of the terminal.

FIG. 11 is a schematic diagram of the structure of a fourth network access management apparatus provided in an embodiment of the present disclosure. As shown in FIG. 11, the fourth network access management apparatus 1100 includes:
a third sending module 1101, configured to send a registration request to the AMF;
a fourth receiving module 1102, configured to receive a registration acceptance message sent by the AMF, where the registration acceptance message includes the subscription data of the terminal, and the subscription data is used to notify the terminal that the AMF accesses the terminal to the network according to the subscription data.

In some embodiments, the subscription data includes at least one of following indications:
a first network access indication indicating that the terminal is an ambient power-enabled Internet of Things terminal;
a second network access indication indicating that a first processing is not performed, where the first processing includes an authentication processing and/or a security processing;
a third network access indication indicating that the first processing is performed using a null algorithm; and
a fourth network access indication indicating an allowed area.

In some embodiments, the terminal is an ambient power-enabled Internet of Things terminal.

The above-mentioned network access management apparatus can support terminals that do not have sufficient power, authentication processing capabilities, or security processing capabilities or ambient power-enabled IoT terminals/devices/tags to access mobile networks or non-public networks based on subscription data.

Regarding the apparatuses in the above embodiments, the specific manners in which the various modules perform operations have been described in detail in the embodiments related to the method, and will not be elaborated upon in detail here.

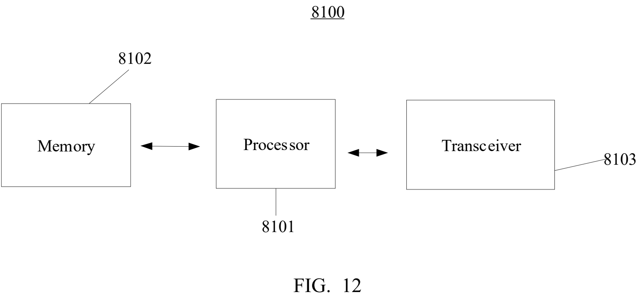

FIG. 12 is a schematic structural diagram of a communication device 8100 provided by an embodiment of the present disclosure. The communication device 8100 may be a network device (such as AMF, UDM, UDR, etc.), or a terminal (such as a User Equipment, etc.), or a chip, chip system, or processor that supports the network device in implementing any of the above methods, or a chip, chip system, or processor that supports the terminal in implementing any of the above methods. The communication device 8100 can be used to implement the methods described in the above method embodiments, and reference can be specifically made to the descriptions in the above method embodiments.

As shown in FIG. 12, the communication device 8100 includes one or more processors 8101, which are configured to call computer instructions to cause the communication device 8100 to execute any of the above access management methods.

Optionally, the communication device 8100 further includes one or more memories 8102 for storing computer instructions. In optional embodiments, all or part of the memories 8102 may also be located outside the communication device 8100.

Optionally, the communication device 8100 further includes one or more transceivers 8103. When the communication device 8100 includes one or more transceivers 8103, the communication steps such as sending and receiving in the above access management method are performed by the transceiver 8103, and the other steps are performed by the processor 8101.

The communication device 8100 described in the above embodiments may be a network device or a terminal, but the scope of the communication device 8100 described in the present disclosure is not limited thereto, and the structure of the communication device 8100 may not be limited by FIG. 8. The communication device may be a standalone device or may be part of a larger device. For example, the communication device may be: (1) a standalone integrated circuit (IC), or chip, or chip system or subsystem; (2) a collection of one or more ICs, optionally, the above IC collection may also include storage components for storing data and computer programs; (3) an ASIC, such as a Modem; (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) other equivalents.

The above communication device 8100 may be a chip or chip system, but is not limited thereto. For example, the communication device 8100 may be a standalone electronic device, or a part of a standalone electronic device. For example, in one embodiment, the electronic device may be an Integrated Circuit (IC) or a chip, where the integrated circuit may be a single IC or a collection of multiple ICs; the chip may include, but is not limited to, the following types: a graphics processing unit (GPU), a central processing unit (CPU), a field programmable gate array (FPGA), a digital signal processor (DSP), an application specific integrated circuit (ASIC), a system on chip (SoC, or System-Level Chip), etc. The above integrated circuit or chip may be used to execute executable instructions (or code) to implement the above access management method. The executable instructions may be stored in the integrated circuit or chip, or may be obtained from other apparatuses or devices. For example, the integrated circuit or chip includes a processor, a memory, and an interface for communicating with other apparatuses. The executable instructions may be stored in the processor and implement the above access management method when executed by the processor; or, the integrated circuit or chip can receive executable instructions through the interface and transmit them to the processor for execution to implement the above access management method.

An embodiment of the present disclosure also provides a readable storage medium storing computer instructions which, when run on the communication device 8100, cause the communication device 8100 to execute any of the above network access management methods. Optionally, the above computer readable storage medium may be a non-transitory computer readable storage medium, or a transitory computer readable storage medium.

The present disclosure also provides a computer program product which, when executed by the communication device 8100, causes the communication device 8100 to execute any of the above network access management methods.

In another exemplary embodiment, a computer program product is also provided, which includes a computer program executable by a programmable apparatus, where the computer program has a code portion for executing the above network access management method when executed by the programmable apparatus.

Other embodiments of the present disclosure will be readily apparent to those skilled in the art upon consideration of the specification and practice of the present disclosure. This application is intended to cover any variations, uses, or adaptations of the present disclosure that follow the general principles of the present disclosure and include common knowledge or customary technical means in the art not disclosed herein. The specification and embodiments are to be regarded as illustrative only, with the true scope and spirit of the present disclosure being indicated by the following claims.

It should be understood that the present disclosure is not limited to the precise structure described and shown in the figures, and various modifications and changes may be made without departing from its scope. The scope of the present disclosure is limited only by the appended claims.

## Claims

1. A network access management method, performed by an access and mobility management function network element (AMF), comprising:
receiving a registration request from a terminal;
determining that the terminal is successfully registered on a unified data management network element (UDM), and determining subscription data of the terminal; and
accessing the terminal to a network according to the subscription data.

2. The method according to claim 1, wherein,
the subscription data comprises a first network access indication, and the first network access indication indicates that the terminal is an ambient power-enabled Internet of Things terminal; and
accessing the terminal to the network according to the subscription data comprises:
accessing the terminal to the network by skipping a first processing or by performing the first processing using a null algorithm; wherein the first processing comprises an authentication processing and/or a security processing.

3. The method according to claim 1, wherein,
the subscription data comprises a second network access indication, wherein the second network access indication indicates that a first processing is not performed, and the first processing comprises an authentication processing and/or a security processing; and
accessing the terminal to the network according to the subscription data comprises:
accessing the terminal to the network by skipping the first processing.

4. The method according to claim 1, wherein,
the subscription data comprises a third network access indication, wherein the third network access indication indicates that a first processing is performed using a null algorithm, and the first processing comprises an authentication processing and/or a security processing; and
accessing the terminal to the network according to the subscription data comprises:
accessing the terminal to the network by performing the first processing using the null algorithm.

5. The method according to any one of claims 2 to 4, wherein,
the subscription data further comprises a fourth network access indication, wherein the fourth network access indication indicates an allowed area; and
accessing the terminal to the network comprises:
accessing the terminal to the network within the allowed area.

6. The method according to claim 5, wherein,
the fourth network access indication is a cell ID and/or a tracking area ID.

7. The method according to any one of claims 1 to 6, further comprising:
sending first information to the UDM, wherein the first information is used by the AMF to request the subscription data from the UDM;
receiving the subscription data returned by the UDM; and
sending a registration acceptance message to the terminal.

8. The method according to claim 7, wherein,
the registration acceptance message comprises the subscription data.

9. A network access management method, performed by a unified data management network element (UDM), comprising:
receiving first information sent by an AMF, wherein the first information is used by the AMF to request subscription data of a terminal from the UDM; and
sending the subscription data to the AMF, wherein the subscription data is used by the AMF to access the terminal to a network.

10. The method according to claim 9, further comprising:
sending second information to a user data repository network element (UDR), wherein the second information is used by the UDM to request the subscription data from the UDR;
receiving the subscription data returned by the UDR; and
storing the subscription data.

11. The method according to claim 9 or 10, wherein the subscription data comprises at least one of following indications:
a first network access indication indicating that the terminal is an ambient power-enabled Internet of Things terminal;
a second network access indication indicating that a first processing is not performed, wherein the first processing comprises an authentication processing and/or a security processing;
a third network access indication indicating that the first processing is performed using a null algorithm; and
a fourth network access indication indicating an allowed area.

12. The method according to any one of claims 9 to 11, further comprising:
sending third information to the UDR, wherein the third information is used by the UDM to subscribe to the subscription data of the terminal from the UDR.

13. A network access management method, performed by a user data repository network element (UDR), comprising:
receiving second information sent by a UDM, wherein the second information is used by the UDM to request subscription data of a terminal from the UDR; and
sending the subscription data to the UDM, wherein the subscription data is to be sent by the UDM to an AMF, and the AMF accesses the terminal to a network according to the subscription data.

14. The method according to claim 13, wherein the subscription data comprises at least one of following indications:
a first network access indication indicating that the terminal is an ambient power-enabled Internet of Things terminal;
a second network access indication indicating that a first processing is not performed, wherein the first processing comprises an authentication processing and/or a security processing;
a third network access indication indicating that the first processing is performed using a null algorithm; and
a fourth network access indication indicating an allowed area.

15. The method according to any one of claims 13 to 14, wherein,
the subscription data of the terminal is stored on the UDR.

16. A network access management method, performed by a terminal, comprising:
sending a registration request to an AMF; and
receiving a registration acceptance message sent by the AMF, wherein the registration acceptance message comprises subscription data of the terminal, and the subscription data notifies the terminal that the AMF accesses the terminal to a network according to the subscription data.

17. The method according to claim 16, wherein the subscription data comprises at least one of following indications:
a first network access indication indicating that the terminal is an ambient power-enabled Internet of Things terminal;
a second network access indication indicating that a first processing is not performed, wherein the first processing comprises an authentication processing and/or a security processing;
a third network access indication indicating that the first processing is performed using a null algorithm; and
a fourth network access indication indicating an allowed area.

18. The method according to claim 17, wherein,
the terminal is an ambient power-enabled Internet of Things terminal.

19. The method according to any one of claims 16 to 18, wherein sending the registration request to the AMF comprises:
sending the registration request to the AMF through a radio access network element (RAN).

20. A first network access management apparatus, comprising:
a first receiving module, configured to receive a registration request from a terminal;
a first determining module, configured to determine that the terminal is successfully registered on a unified data management network element (UDM) and determine subscription data of the terminal; and
an access module, configured to access the terminal to a network according to the subscription data.

21. A second network access management apparatus, comprising:
a second receiving module, configured to receive first information sent by an AMF, wherein the first information is used by the AMF to request subscription data of a terminal from a UDM; and
a first sending module, configured to send the subscription data to the AMF, wherein the subscription data is used by the AMF to access the terminal to a network.

22. A third network access management apparatus, comprising:
a third receiving module, configured to receive second information sent by a UDM, wherein the second information is used by the UDM to request subscription data of a terminal from a UDR; and
a second sending module, configured to send the subscription data to the UDM, wherein the subscription data is to be sent by the UDM to an AMF, and the AMF accesses the terminal to a network according to the subscription data.

23. A fourth network access management apparatus, comprising:
a third sending module, configured to send a registration request to an AMF; and
a fourth receiving module, configured to receive a registration acceptance message sent by the AMF, wherein the registration reception message comprises the subscription data of a terminal, and the subscription data notifies the terminal that the AMF accesses the terminal to a network according to the subscription data.

24. A communication device, comprising:
one or more processors;
wherein the processor is configured to call computer instructions to cause the communication device to execute the network access management method according to any one of claims 1 to 19.

25. A network access management system, comprising an access and mobility management function network element (AMF), a unified data management network element (UDM), a user data repository network element (UDR) and a terminal, wherein the AMF is configured to implement the network access management method according to any one of claims 1 to 8, the UDM is configured to implement the network access management method according to any one of claims 9 to 12, the UDR is configured to implement the network access management method according to any one of claims 13 to 15, and the terminal is configured to implement the network access management method according to any one of claims 16 to 19.

26. A computer-readable storage medium, storing computer instructions, wherein the computer instructions, when executed on a communication device, cause the communication device to execute the network access management method according to any one of claims 1 to 19.
